(19)

**Europäisches Patentamt**
**European Patent Office**
**Office européen des brevets**

(11) **EP 4 439 234 A1**

(12) **EUROPEAN PATENT APPLICATION**

(43) Date of publication:
**02.10.2024 Bulletin 2024/40**

(51) International Patent Classification (IPC):
***G06F 1/32*** (2019.01) ***G06F 1/08*** (2006.01)

(21) Application number: **24163177.9**

(22) Date of filing: **13.03.2024**

(52) Cooperative Patent Classification (CPC):
**G06F 1/324; G06F 1/08; G06F 1/10; G06F 1/28;**
**G06F 1/3206; G06F 1/3212**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.03.2023 IT 202300006282**

(71) Applicant: **STMicroelectronics International N.V.**
**1228 Plan-les-Ouates, Geneva (CH)**

(72) Inventors:
• **MONDELLO, Antonino**
**98148 Messina (IT)**
• **INGLESE, Alessandro**
**95030 San Pietro Clarenza (Catania) (IT)**
• **CONDORELLI, Riccardo**
**95030 Tremestieri Etneo (Catania) (IT)**

(74) Representative: **Buzzi, Notaro & Antonielli d'Oulx**
**S.p.A.**
**Corso Vittorio Emmanuele II, 6**
**10123 Torino (IT)**

(54) **REDUCED POWER CONSUMPTION CIRCUIT AND CORRESPONDING METHOD**

(57) A system on chip, SOC circuit comprising a plurality of peripherals ($18_{11}$, $18_{12}$, ..., $18_{1k}$; ...; $18_{N1}$, $18_{N2}$, ..., $18_{Nk}$) configured to be clocked with respective clock signals (CK11, CK12, ..., CK1k; ..., CKN1, CKN2, ..., CKNk), wherein the circuit comprises a clock controller (217) configured ($16_1$, ..., $16_N$; $19_1$, ..., $19_N$) to produce said respective clock signals (CK11, CK12, ..., CK1k; ..., CKN1, CKN2, ..., CKNk) via respective clock divide factors ($N_1$, ..., $N_k$), the clock controller (217) comprising a plurality of storage locations having stored therein respective sets of clock divide factors ($N_1$, ..., $N_k$), wherein the clock controller (217) comprises clock divide factor selection circuitry (266) configured to select an operating set of clock divide factors ($N_1$, ..., $N_k$) out of said respective sets of clock divide factors ($N_1$, ..., $N_k$) stored in said plurality of storage locations and wherein the clock controller (217) is configured ($16_1$, ..., $16_N$; $19_1$, ..., $19_N$) to apply to the plurality of peripherals ($18_{11}$, $18_{12}$, ..., $18_{1k}$; ...; $18_{N1}$, $18_{N2}$, ..., $18_{Nk}$) respective clock signals (CK11, CK12, ..., CK1k; ..., CKN1, CKN2, ..., CKNk) produced via the clock divide factors ($N_1$, ..., $N_k$) in the operating set of clock divide factors ($N_1$, ..., $N_k$) selected out of said respective sets of clock divide factors ($N_1$, ..., $N_k$) stored in said plurality of storage locations.

Fig. 5

EP 4 439 234 A1

**Description**

Technical field

The description relates to electronic circuits.
One or more embodiments can be applied to electronic circuits such as, for instance, System On Chip, SOC circuits with power-saving features.

Background

Certain electronic devices such as portable devices like cellular phones are unable to support prolonged high power consumption conditions due to battery limitations.
A control of power absorption and performance may effectively counter waste of energy and at the same time improve performance under energy constraints.
A dynamic balance of power absorption and performance, possibly detecting unnecessary/undesired extra power consumption and facilitating low power consumption (whenever this does not result in undesired performance degradation) may thus represent a goal to pursue in these applications.
Solutions with balanced current consumption and performance, especially with applications unable to support high current consumption for a long time, due to battery limitations, for instance, are thus desirable.

Object and summary

An object of one or more embodiments is to contribute in providing such a solution.
According to one or more embodiments, that object is achieved via a circuit (a system on chip, SOC circuit, for instance) having the features set forth in the claims that follow.
One or more embodiments concern a related configuration method.
The claims are an integral part of the technical teaching provided in respect of the embodiments.
Solutions as described herein include a consumption detector, CD and a clock controller, CC with a set of clock division factors applied to control consumption.
For instance, in exemplary solutions as described herein, a consumption detector, CD uses two threshold registers to save two current values $Imax1_{reg}$ and $Imax2_{reg}$; these represent an upper threshold and a lower threshold, respectively, that can be set according to battery specifications. A current absorbed is compared with these two thresholds and, based on the result of comparison with these thresholds $Imax1_{reg}$ and $Imax2_{reg}$, a set of parameters (dividers of the clocks) is selected and applied.
In exemplary solutions as described herein:

     division factors can be calculated by a clock controller, SCC, contained within the clock controller, CC, in order to reduce consumption by reducing an operating frequency by modifying the clocks, and
     the clock controller, SCC may implement a learning procedure to determine certain sets of clock division factors, for instance, with the possibility of applying fixed clock dividers for certain functions held to be critical.

Solutions as described herein facilitate achieving a judicious trade-off between current consumption and performance.

Brief description of the figures

One or more embodiments will now be described, by way of example only, with reference to the annexed figures, wherein:

     Figure 1 is a block diagram of a regulated supply domain in System On Chip, SOC architecture;
     Figure 2 is a block diagram of a clock controller and peripherals coupled therewith;
     Figure 3 is a block diagram of a regulated supply domain in System On Chip architecture according to embodiments of the present disclosure;
     Figure 4A and Figure 4B are block diagrams of a consumption detector according to embodiments of the present disclosure;
     Figure 5 is a block diagram of a clock controller and associated peripherals according to embodiments of the present disclosure; and
     Figure 6 is a block diagram of a clock controller according to embodiments of the present disclosure.

Corresponding numerals and symbols in the different figures generally refer to corresponding parts unless otherwise indicated.
The figures are drawn to clearly illustrate the relevant aspects of the embodiments and are not necessarily drawn to scale.
The edges of features drawn in the figures do not necessarily indicate the termination of the extent of the feature.

Detailed description

In the ensuing description one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.
Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular configurations, structures, or characteristics may be combined in any adequate way in one or more embodiments.

The headings/references used herein are provided merely for convenience and hence do not define the extent of protection or the scope of the embodiments.

For simplicity and ease of explanation, throughout this description, and unless the context indicates otherwise, like parts or elements are indicated in the various figures with like reference signs, and a corresponding description will not be repeated for each and every figure.

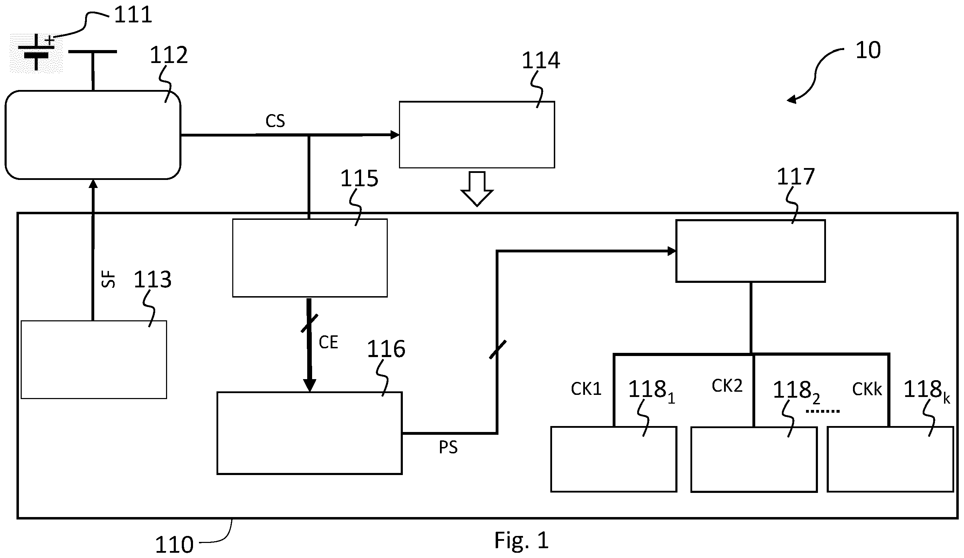

Figure 1 discloses a regulated supply domain, RSD 110 of System On Chip, SOC architecture 10, that does not include a feature for achieving control of power absorption and performance, which may result in faster battery depletion and reduced performance.

The SOC architecture 10 and of the regulated supply domain 110 are powered via a voltage supply 111 (i.e., a battery, for instance, a coin battery at a voltage VS), which is coupled to a power management unit (PMU) 112.

The power management unit 112 is powered by the battery 111 and is configured to receive a supply feedback signal SF from a power grid 113 and to output a current control signal CS to a regulator 114.

The regulator 114 is configured to regulate the voltage of the regulated supply domain 110, and the current control signal CS is also applied to a consumption detector 115.

The consumption detector CD 115 is configured to monitor the amount of current in the RSD 110 and to provide a current evaluation signal CE to a power control logic unit 116.

The power control logic unit 116 is configured to receive the current evaluation signal CE as an input and to output, based on the state of the signal CE, a power status signal PS (for instance, run, low power run, standby, etc.,) that is then provided to a clock controller, CC 117.

The clock controller, CC 117 is configured to generate, according to the input power status signal PS received from the power control logic unit 116, a plurality of different clock signals CK1, CK2, ..., CKk that are provided to a plurality of (peripheral) clock domains $118_1$, $118_2$, ..., $118_k$.

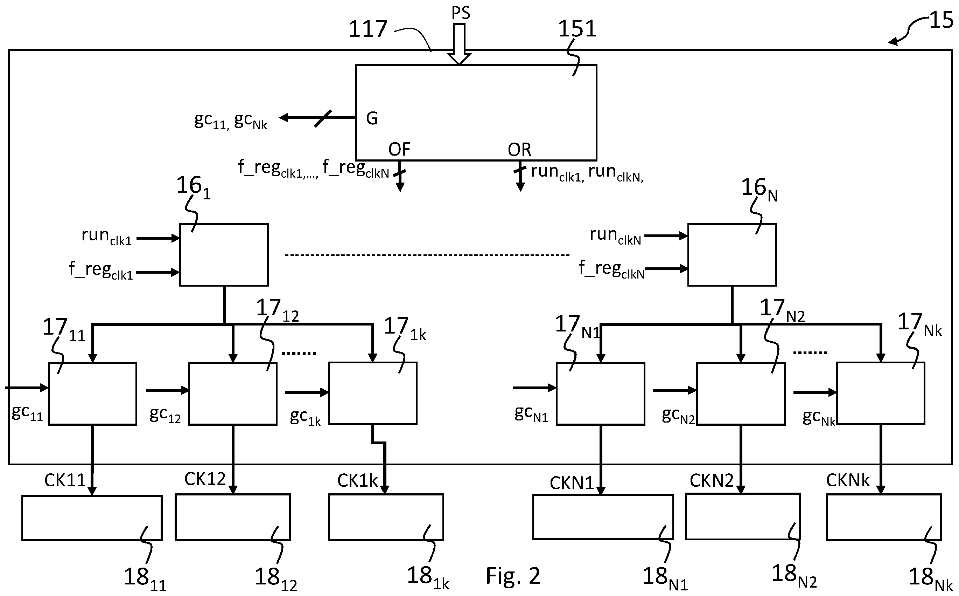

Figure 2 shows a possible implementation of a clock controller 117 as illustrated in Figure 1 having coupled therewith a plurality of peripherals $18_{11}$, $18_{12}$, ..., $18_{1k}$ to $18_{N1}$, $18_{N2}$, ..., $18_{Nk}$.

These peripherals may be in any number and include, by way of example, master or slave peripherals that may be managed by standard/custom buses, for instance, AHB (Advanced High-performance Bus), APB ("Advanced Peripheral Bus"), or any others (OBI "Open Bus Interface", AXI "Advanced eXtensible Interface", etc.).

The clock controller 117 is configured to receive from the power control logic unit 116 a power status signal PS (see the diagram of Figure 1) and to apply that signal PS to a clock controller logic and register block 151 included in the clock controller 117.

The clock controller 117 illustrated in Figure 2 does not provide for absorption control, which may lead to fast battery depletion and reduced performance.

As illustrated In Figure 2, the block 151 is configured to calculate and provide as its outputs:

oscillator frequencies $f\_reg_{clk1}$, ..., $f\_reg_{clkN}$ (collectively designated OF);
oscillator run values $run_{clk1}$, ..., $run_{clkN}$ (collectively designated OR), and
gating values $gc_{11}$, ..., $gc_{Nk}$ (collectively designated G) .
The oscillator frequencies OF and the oscillator run values OR are provided as input to respective oscillators labelled $16_1$, ..., $16_N$. Each oscillator $16_1$, ..., $16_N$ generates a different clock signal for different clock domains $118_1$, $118_2$, ..., $118_k$. The oscillators $16_1$, ..., $16_N$ are configured to generate the respective clock signals according to the (respective) oscillator frequency $f\_reg_{clk1}$, ..., $f\_reg_{clkN}$ and run $run_{clk1}$, ..., $run_{clkN}$ values received.

The oscillators $16_1$, ..., $16_N$ are configured to provide their respective generated clock signals to respective sets of gating blocks $17_{11}$, $17_{12}$, ..., $17_{1k}$ to $17_{N1}$, $17_{N2}$, ..., $17_{Nk}$.

The sets of gating blocks $17_{11}$, $17_{12}$, ..., $17_{1k}$ to $17_{N1}$, $17_{N2}$, ..., $17_{Nk}$ are configured to be clocked by the clock signals generated by the respective oscillators $16_1$, ..., $16_N$ and receive the gating values $gc_{11}$, ..., $gc_{Nk}$ provided by the clock controller logic and registers block 151, to output respective sets of gated clock signals CK11, CK12, ..., CK1k to CKN1, CKN2, ..., CK1M to the peripherals $18_{11}$, $18_{12}$, ..., $18_{1k}$ to $18_{N1}$, $18_{N2}$, ..., $18_{Nk}$ respectively coupled therewith.

As discussed, various embodiments of the present disclosure provide solutions for a regulated supply domain of System On Chip architecture with a power saving feature: for a general description of a regulated supply domain in conventional System On Chip architecture, reference can be made to the previous description of Figures 1 and 2.

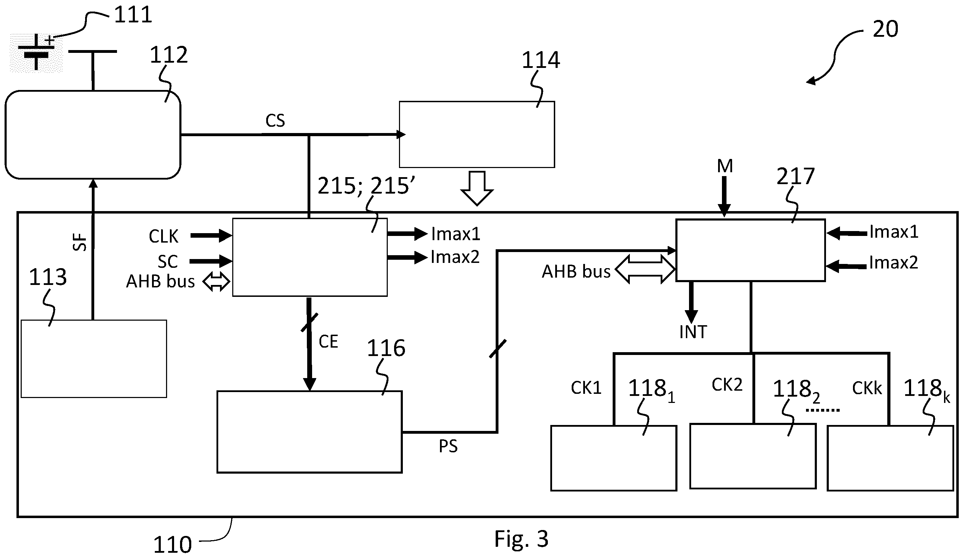

Figure 3 is a block diagram showing a regulated supply domain 20 in System On Chip architecture according embodiment of the present disclosure.

For brevity and ease of understanding, in Figures 3 to 6 parts or elements like parts or elements already described in connection with Figures 1 and 2 are denoted by the same reference symbols already appearing in Figure 1 and 2 and a detailed description of these parts or elements will not be repeated in the following.

By way of direct comparison with Figure 1, the regulated supply domain 20 illustrated in Figure 3 includes, together with parts or elements that may be unchanged with respect to Figure 1:

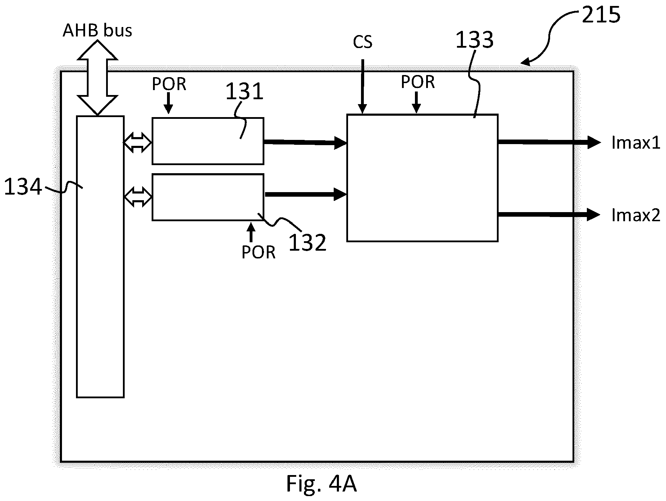

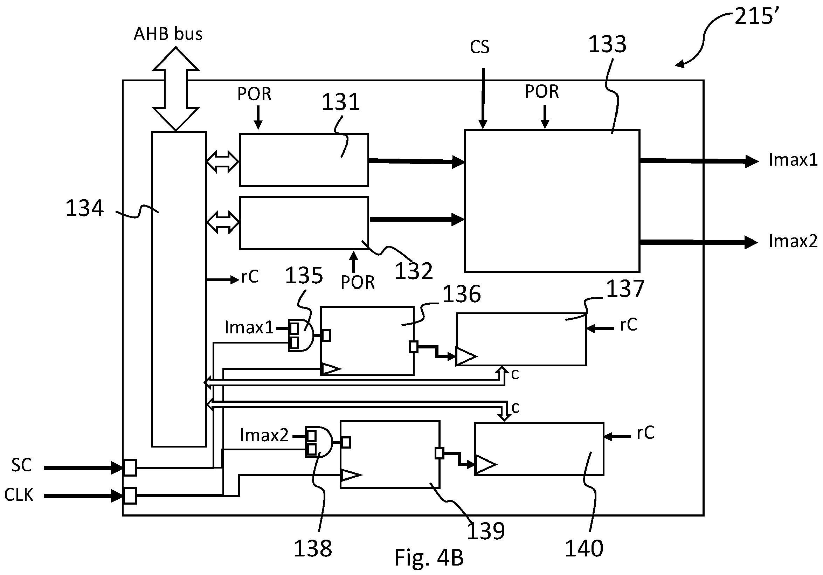

a consumption detector, CD - this may be, for instance, either the consumption detector 215 of Figure 4A or the consumption detector 215' of Figure 4B - that is configured to replace the consumption detector 115 of Figure 1, and

a clock controller, CC 217 that is configured to replace the clock controller 117 of Figure 1.

As illustrated in Figures 3, 4A, and 4B the consumption detector CD 215, 215' receives as input values the current control signal CS, a clock signal CLK, and a count start flag SC: for instance, this may be via an Advanced High-performance, AHB bus and the representation of the AHB as a separate entity in Figure 3 is merely functional and for the sake of clarity.

As illustrated in Figures 3, 4A, and 4B:

the consumption detector CD 215, 215' is configured to provide as outputs the current evaluation signal CE, a first flag Imax1, and a second flag Imax2; and the clock controller CC 217 is configured to be coupled to the AHB bus and to receive as input values the first flag Imax1, the second flag Imax2, a power status signal PS, and a mode signal M. In addition, it is configured to provide as outputs such plurality of different clock signals CK1, CK2, ..., CKk and, optionally, an interrupt INT which may be maskable to core.

Figures 4A and 4B are block diagrams showing certain features of a consumption detector CD 215, 215' according to embodiments of the present disclosure.

For simplicity, features left unchanged with respect to Figure 1 are not visible in Figures 4A and 4B.

The consumption detector CD 215 of Figure 4A includes two threshold registers, 131 and 132, which are configured to have stored therein the values for two thresholds, a first threshold $Imax1_{reg}$ and a second threshold $Imax2_{reg}$, respectively. These are an upper threshold and a lower threshold, respectively, that may be set according to battery specification or introduced by the user, for instance, to be sure that a specific task uses current values that do not reach threshold values determined by the user, for instance, in case of particular applications.

The threshold registers 131, 132 may be accessible, for instance, for both read and write operations, through a standard bus interface 134, for instance, an AHB bus or a different standard bus, and may be configured to receive a POR ("Power-On Reset") signal to reset the value contained in the threshold registers 131, 132 when a reset event occurs.

The threshold registers 131, 132 are coupled with a current detector block 133 that is configured to receive as input values such first threshold $Imax1_{reg}$ and second threshold $Imax2_{reg}$ stored in the threshold registers 131, 132, the current control signal CS, and the POR signal.

As illustrated, the current detector block 133 is configured to compare a currently available current I, obtained from the current control signal CS, with the first threshold $Imax1_{reg}$ and the second threshold $Imax2_{reg}$ received as input.

For instance, the current detector block 133 may be configured to:

compare the value of the currently available current I with the first threshold $Imax1_{reg}$ and if the condition $I \geq Imax1_{reg}$ is satisfied, the value of a first flag Imax1 is set to 1, otherwise it is set to 0; and compare the value of the currently available current I with the second threshold $Imax2_{reg}$ and if the condition $I \geq Imax2_{reg}$ is satisfied, the value of a second flag Imax2 is set to 1, otherwise it is set to 0.

Thus, the first flag Imax1 and second flag Imax2 indicate if the currently available current I, i.e., the current consumption, is over a threshold, for instance, over the first threshold $Imax1_{reg}$ and (also) over the second threshold $Imax2_{reg}$, respectively.

Hence, the current detector block 133 can be configured to provide as its outputs the value of the first flag Imax1 and the value of the second flag Imax2 continuously. These outputs are then forwarded as outputs of the consumption detector CD 215.

Figure 4B is a block diagram showing a consumption detector CD 215' according to another embodiment of the present disclosure. In addition to the components already described in Figure 4A (these will not be described again in the following in order not to overburden the present detailed description) the consumption detector CD 215' of Figure 4B may optionally contain two counter registers, 137 and 140, that are configured to contain the values of two counters, a first counter $CImax1_{reg}$ and a second counter $CImax2_{reg}$, respectively.

The first counter $CImax1_{reg}$, when enabled, is configured to count the number of clock periods in which the condition $I \geq Imax1_{reg}$ is satisfied, while the second counter $CImax2_{reg}$, when enabled, is configured to count the number of clock periods in which the condition $I \geq Imax2_{reg}$ is satisfied.

The counter registers 137, 140 may be accessible, for instance, for both read and write operations, through a standard bus interface 134, for instance, the AHB bus or a different standard bus, and they may be configured to receive a reset signal rC from the bus interface 134 to reset the value contained in the counter registers 137, 140. The consumption detector, CD 215' is further configured to receive the clock signal CLK and the count start flag SC as input signals.

The count start flag SC is coupled with AND logic gates 135, and 138 and it is used to enable the count of the conditions $I \geq Imax1_{reg}$, and $I \geq Imax2_{reg}$, respectively.

The AND gate 135 is configured to receive at its inputs the first flag Imax1 and, as previously described, the count start flag SC which is used as a masking signal for the first flag Imax1.

The output of the AND gate 135 is set in response to both the first flag Imax1 and the count start flag SC being set, and is provided as input to a clock gating block 136.

As illustrated, the clock gating block 136 is configured to receive as input the output of the AND gate 135 and the clock signal CLK, and provides as output a gated clock that is used to drive the counter register 137.

Similarly, the output of the AND gate 138 is set in response to both the second flag Imax2 and the count start flag SC being set, and is provided as input to a clock gating block 139.

The clock gating block 139 is configured to receive as input the output of the AND gate 138 and the clock signal CLK, and provides as output a gated clock that is used to drive the counter register 140.

The circuitry that differentiates the embodiment of Figure 4B from the embodiment of Figure 4A provide for the possibility of having an insight of the effective number of times in which the first and second flags Imax1 and Imax2 are set.

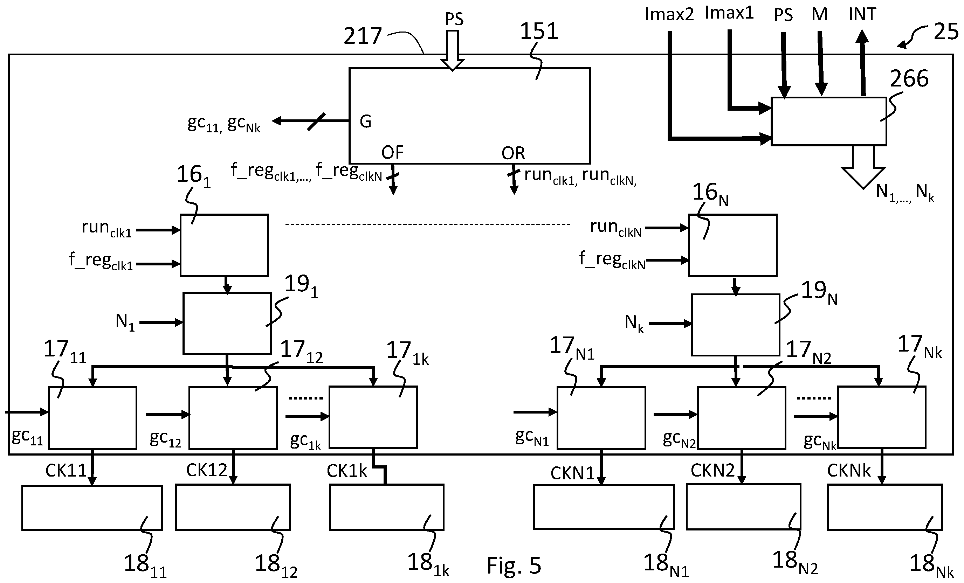

Figure 5 is a block diagram showing a clock controller 25 and peripherals $18_{11}$, $18_{12}$, ..., $18_{1k}$ to $18_{N1}$, $18_{N2}$, ..., $18_{Nk}$, coupled therewith. According to various possible embodiments of the present disclosure these may be, for instance, master or slave peripherals such as AHB ("Advanced High-performance Bus") or APB ("Advanced Peripheral Bus") peripherals.

In the following, elements or components which have already been described with reference to the previous figures are denoted by the same references previously used in these figures. A description of these elements already described previously will not be repeated in order not to overburden the present detailed description.

The solutions described herein include a clock controller, CC 217 with a set of clock division factors calculated by a clock controller SCC to be then applied to modify peripheral consumption, reducing the operating frequencies of the peripherals by modifying the clocks applied thereto, which leads to a more accurate control of power consumption and performance.

In the embodiment illustrated in Figure 5, the oscillators $16_1$, ..., $16_N$ are configured to generate respective clock signals according to a respective received oscillator frequency and a respective run value.

In the embodiment illustrated in Figure 5, the oscillators $16_1$, ..., $16_N$ are configured to provide the respective generated clock signal to an intermediate clock divider block $19_1$, ..., $19_N$.

The intermediate clock divider block $19_1$, ..., $19_N$ is configured to receive as inputs the respective clock signals and clock divide factors $N_1$, ..., $N_k$, and is configured to provide as an output a divided clock signal which is then provided to respective sets of gating blocks $17_{11}$, $17_{12}$, ..., $17_{1k}$ to $17_{N1}$, $17_{N2}$, ..., $17_{Nk}$.

As illustrated herein, the clock divide factors $N_1$, ..., $N_k$, are computed in a circuit 266 taking into account clock constraints and then stored in dedicated registers associated therewith.

The circuit 266 is configured to act as a "smart" clock controller SCC and will be referred to in the following either as SCC or, briefly, as clock controller.

A non-limiting example of a clock constraints that can be taken into account in computing clock division factors $N_1$, ..., $N_k$ is, for instance, $\alpha_1 f_{clk1} > \alpha_2 f_{clk2}$, etc. wherein some of the $\alpha_x$ factors may be rational $\alpha_x = p_x/q_x$.

Moreover, a configuration of the clock division factors $N_1$, ..., $N_k$ such as $N_1 = 0$, ..., $N_k = 0$ may be regarded as inadmissible.

In a default configuration of the clock division factors $N_1$, ..., $N_k$, the value associated with such clock division factors $N_1$, ..., $N_k$ is $N_1 = 1$, ..., $N_k = 1$ which is called the "legacy condition". In the legacy condition, the method cannot change the original clock phases and the clock gating policy.

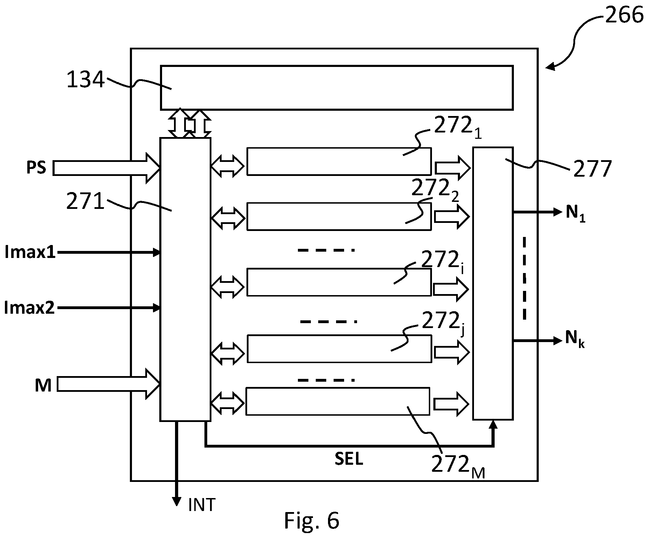

As illustrated in Figure 6, the clock controller circuit 266 (SCC) is configured to receive as inputs the first flag Imax1, the second flag Imax2, the power status signal PS, and the mode signal M, and is configured to provide as its output an interrupt INT which may be maskable to core and the set of such clock divide factors $N_1$, ..., $N_k$.

In addition, the clock controller 266 may implement a method to determine certain sets of clock division factors, for instance, with the possibility to applying fixed clock dividers for certain functions held to be critical.

Figure 6 is a block diagram of a "smart" clock controller 266 according to embodiments of the present disclosure.

As previously stated, the clock controller 266 is configured to be coupled to the bus interface 134, for instance, an Advanced High-performance Bus (AHB), Open Bus Interface (OBI), Advanced eXtensible Interface (AXI), or other types of standard interfaces, and to receive at its inputs:

the first flag Imax1 and the second flag Imax2, which are provided by the consumption detector CD 215, and that indicate over threshold events,
the power status signal PS, for instance, run, low power run, standby, etc., received from the power control logic unit 116; and
the mode M, for instance, transparent, set/reset, active, forced, etc.

As illustrated, the clock controller 266 is configured to provide as an output:

the interrupt INT, whenever the first flag Imax1 and/or the second flag Imax2 are set, which is sent to a core and that may be maskable to such core; and the set of clock divide factors $N_1$, ..., $N_k$ that are currently in use, i.e., corresponding to the current mode M in use.

The input signals received by the clock controller SCC 266 are forwarded as inputs to a control register 271. The control register 271 is coupled to the bus interface 134 which is used, for instance, by a core, to configure such control register 271, for instance, to read/write sets of registers.

The control register 271 is further coupled to sets of registers RS $272_1$, ..., $272_2$, $272_i$, ..., $272_j$, ..., $272_M$ each of them containing the values of the clock divide factors $N_1$, ..., $N_k$ to be used for each different power scenario plus some others used for special purposes.

Exemplary possible sets of registers may include:

a set $RS_1$ $272_1$, which contains (in k positions) clock divide factors $(N_1, ..., N_k)_1$ for use in a run mode; a set $RS_2$ $272_2$, which contains (in k positions) clock divide factors $(N_1, ..., N_k)_2$ for use in a low-power run mode; sets $RS_i$ $272_i$ to $272_j$, which contain (in k positions) clock divide factors $(N_1, ..., N_k)_i$ to $(N_1, ..., N_k)_j$ for use in running various subtasks; and a set $RS_M$ $272_M$, for instance, learning registers, which contain (in k positions) clock divide factors $(N_1, ..., N_k)_M$ for use in a learning mode.

The registers in the sets of registers exemplified above, collectively referred to as 272 in the following, are coupled to inputs of a multiplexer 277.

As illustrated, the control register 271 is configured to manage the selection of registers in the sets collectively referred to as 272 based on the received input mode signal M.

As illustrated, the control register 271 generates a selection signal SEL which is forwarded to the multiplexer 277 to select the multiplexer inputs, namely, the set of registers, for instance, $272_1$, to be used and that can be coupled with the output of the multiplexer.

The output from the multiplexer 277 is provided as an output from the ("smart") clock controller 266 which identifies the set of clock divide factors $N_1$, ..., $N_k$ related to the currently used power mode M.

In addition, the control register 271 can also generate an interrupt INT, which is then forwarded to the clock controller SCC 266.

The input mode signal M may have, by way of example, one of the following contents/meanings:

transparent, namely a default state where the clock division factors $N_1$, ..., $N_k$ are equal to those of the "legacy condition", for instance $N_1 = 1$, ..., $N_k = 1$; set/reset, namely a condition where the content of the sets of registers can be modified, for instance, from the AHB bus, with learning registers copied in one set of registers in the sets of registers; active, namely a condition where the set of registers to be used is selected automatically according to the current power status signal PS from the power control logic unit 116; forced, namely a condition where the set of registers to be used is imposed by the core, by using the bus interface, for instance, when it is desired to select a set of registers that contains clock divide factors to be used during the run of a specific subtask; and learning, which can be programmed in a plurality of different ways, according to the method used for the computation of the clock divide factors.

The mode signal M to the clock controller 266 can be set to a forced mode and used to optimize the configuration in use and to optimize power and performance in "special operation" conditions.

In that case, a forced mode is selected (via a system core, for instance) before or during the "special operation" conditions or, alternatively, designer/architect can select the forced mode with special hardware configurations, for instance, when the core is off for low power mode.

Non-limiting examples of "special operation" may be:

a run operation while receiving/transmitting data from/to a radio interface, for instance, a UWB (Ultra-Wide Band) modem, when it is desired that operation consumption should be maintained below a given threshold; a run operation while a crypt/decrypt operation is in progress, for instance, with both the crypto hardware and the core running; a low-power run operation while the radio interface, for instance, a UWB modem, is off and a wired interface(s) is/are receiving some data.

In addition, a forced mode can be selected even when an interrupt INT is raised due to overconsumption, for instance, or due to a rare/unexpected event occurring such as low power or performance emergency, i.e., battery level is very low.

The system core refer to herein can also be configured to store the calculated values of the clock divide factors $N_1$, ..., $N_k$ in a non-volatile memory associated with the core, for instance, a Flash, PCM ("Phase-change memory"), or OTP ("One Time Programmable"), etc. memory.

Then, at each power cycle reset event POR, the calculated values of the clock divide factors $N_1$, ...,

$N_k$ stored within the sets of registers RS 272 are preset to the "legacy condition", i.e., $N_1$, ..., $N_k$ is $N_1$ = 1, ..., $N_k$ = 1.

Once a power on reset (POR) sequence is completed, the core may load the sets of registers RS 272 with non-volatile values for the clock divide factors $N_1$, ..., $N_k$ previously stored in the non-volatile memory by the core.

Different tuning criteria can be used in order to tune in an efficient way the clock divide factors $N_1$, ..., $N_k$.

In the following, certain non-limiting examples of tuning criteria that can be used will be described by way of example.

A possible tuning criterion is a trial-and-error approach that can be implemented on a "one time" basis, once system architecture is devised.

Therefore, once the clock divide factors $N_1$, ..., $N_k$ are calculated in a first testing phase of the system architecture, the calculated clock divide factors $N_1$, ..., $N_k$ may be also applied to the whole, or a part of, production of the same system architecture. In addition, the calculated clock divide factors $N_1$, ..., $N_k$ may be also applied as default value to the products with the same system architecture to be further refined by the users according to their particular needs and applications implemented.

In such a case, multiple "experiments" are performed increasing one-by-one the values of the clock divide factors $N_1$, ..., $N_k$, and storing, for each of the attempts, a value for the first counter $Clmax1_{reg}$, a value for the second counter $Clmax2_{reg}$, and the execution time.

In that way, after a set of experiments, it is possible to select combinations of clock divide factors $N_1$, ..., $N_k$ values that lead to reduced count values for the first and the second counter $Clmax1_{reg}$ and $Clmax2_{reg}$, while leaving the execution time involved substantially unchanged.

Exemplary steps that can may be considered for implementing such a tuning criterion are the following:

first step: the input mode signal M is set to a "learning" mode and the learning registers in the set $272_M$ are set to the "legacy condition", i.e., $N_1$, ..., $N_k$ is $N_1$ = 1, ..., $N_k$ = 1;

second step: the values of the two counter registers 137, 140 of the consumption detector 215' are reset by setting the values of the first counter $Clmax1_{reg}$ and of the second counter $Clmax2_{reg}$ to a predetermined value, for instance, zero, by using the bus interface 134 (for instance, a AHB interface);

third step: the SOC device 20 is configured to operate in a desired scenario and "optimized" by selecting a specific power mode, that is setting the power status signal PS, for instance, to run, low power run, standby, ecc. thus, preparing the SOC device 20 to execute one or more desired tasks;

fourth step: these tasks are executed on the SOC device; and

fifth step: the values stored in the two counter registers $Clmax1_{reg}$ and $Clmax2_{reg}$ and the execution time at the end of execution of the one or more tasks are analyzed.

If consumption and performance meet desired specifications, the calculated clock divide factors $N_1$, ..., $N_k$ stored within the learning registers set $RS_M$ $272_M$ are copied to the set of registers of the sets of registers corresponding to the power status signal PS that is currently used, i.e., the used power mode, and the procedure for the computation of the clock divide factors $N_1$, ..., $N_k$ values stops.

Alternatively, the trial-and-error approach procedure continues until the target consumption and performance are reached via additional steps including:

sixth step: changing the value of the clock divide factors $N_1$, ..., $N_k$ in the learning registers set $272_M$, (taking into account possible clock constraints), for instance, incrementing one of the clock divide factors $N_1$, ..., $N_k$ by 1; and

seventh step: running again the procedure starting from the second step.

This approach results in a simple, yet long (quasi-manual) approach which can be useful for certain purposes.

An example of a second tuning criterion is an automatic approach.

In that case, tuning of the clock divide factors $N_1$, ..., $N_k$ values may be done directly by the SOC core via different approaches, for instance, simulated annealing, tabu search, etc.

A problem to be solved can be defined as finding optimal clock divide factors $N_{1opt}$, ..., $N_{kopt}$:

$$RS_i = (N_{1opt}, ..., N_{kopt})$$

such that power absorption is minimized and performance maximized taking into account clock constraints.

Hence, optimal clock divide factors $N_{1opt}$, ..., $N_{kopt}$ can be found by solving an optimization problem and saving the resulting optimal clock divide factors $N_{1opt}$, ..., $N_{kopt}$ in a set of registers out of the sets of registers corresponding to the power mode used, that is to the power status signal PS.

Such a problem can be solved via the following steps:

determining a cost function describing the cost of execution of a/some particular task(s) as **cost_function = f(Clmax1, Clmax2, Time_{execution})**; and

minimizing the cost function, bearing in mind that the first counter $Clmax1_{reg}$, the second counter

$CImax2_{reg}$, and the time of execution $Time_{execution}$ depend, in a nonlinear way, on the optimal clock divide factors $N_{1opt}$, ..., $N_{kopt}$, and that inadmissible values for the (optimal) clock divide factors $N_{1opt}$, ..., $N_{kopt}$ due to clock constraints are discarded.

In various embodiments, the cost function may contain also other measurements that are available on the SOC.

The minimization of such a cost function may be performed using different minimization techniques, for instance, simulated annealing, tabu search, etc. Such techniques to find the minimum of a function are well-known in the art, and will not be described in detail herein to not overburden the present detailed description.

By way of example, the following steps may be applied in a minimization technique of the simulated annealing for computing optimal clock divide factors $N_{1opt}$, ..., $N_{kopt}$ in the solution disclosed herein:

first step: set in a random manner the values of the clock divide factors $N_1$, ..., $N_k$ in a specific set of registers of the sets of registers 272 which is a candidate to containing optimal clock divide factors $N_{1opt}$, ..., $N_{kopt}$. Some of the randomly drawn values of the clock divide factors $N_1$, ..., $N_k$ may be rational numbers, but in any case, inadmissible values due to clock constraints are discarded;
second step: execute one or more tasks on the SOC device; and
third step: if the value of the cost function **$f(CImax1, CImax2, Time_{execution})$** is lower than the cost function in the previous iteration, the current values of the clock divide factors $N_1$, ..., $N_k$ are accepted as new values, otherwise they are accepted with a probability p, to avoid remaining in a local minimum of the cost function.

At the end of the third step, the process is repeated again from the first step, for instance after changing randomly a few of the clock divide factors $N_1$, ..., $N_k$ in the specific set of registers of the sets of registers 272, and the loop is repeated (even a large number of times such as a thousand times).

At the end of looping, the values stored in the specific set of registers of the sets of registers 272 which is expected to contain optimal clock divide factors $N_{1opt}$, ..., $N_{kopt}$ are optimal clock divide factors sought $N_{1opt}$, ..., $N_{kopt}$. These optimal clock divide factors $N_{1opt}$, ..., $N_{kopt}$ are stored in a set of registers out of the sets of registers 272 at the end of the computation procedure. The values are "frozen" and used in the specific real scenario for what they were calculated.

Therefore, different sets of optimal clock divide factors $N_{1opt}$, ..., $N_{kopt}$ can be computed for different scenarios, for instance, by using different metrics or for different performance/battery life balances. Prior to starting a particular task related to one of such different scenarios, the corresponding optimal clock divide factors $N_{1opt}$, ..., $N_{kopt}$ for that scenario are used to replace the default ones.

Various embodiments may adopt different arrangements for storing the optimal clock divide factors $N_{1opt}$, ..., $N_{kopt}$.

For instance, in various embodiments, the optimal clock divide factors $N_{1opt}$, ..., $N_{kopt}$ computed may be stored in a non-volatile memory, for instance, Flash, PCM, OTP, etc., and retrieved after each power cycle to be stored in a corresponding specific set of registers of the sets of registers 272.

In other embodiments, the optimal clock divide factors $N_{1opt}$, ..., $N_{kopt}$ computed may be retained in non-volatile registers. Such a solution may be used for instance, in flash-less products.

In still other embodiments, the optimal clock divide factors $N_{1opt}$, ..., $N_{kopt}$, once first computed, can be re-calculated at each power cycle. Such a solution may be considered for instance, for devices that remain always on and that are switched off a few times a year.

Thus, the solution provided herein discloses a consumption detector, CD and a clock controller, CC with a set of clock division factors applied to modify consumption.

The consumption detector, CD uses two threshold registers to store two current thresholds, $Imax1_{reg}$ and $Imax2_{reg}$, which are used as a comparison for an absorbed current. In response to these thresholds $Imax1_{reg}$ and $Imax2_{reg}$, being exceeded a certain set of dividers of the clocks is selected and applied.

Division factors are calculated by a "smart" clock controller, SCC, that is circuit included in the clock controller, CC, circuitry in order to reduce the consumption by reducing a peripherals operating frequency. The "smart" clock controller, SCC may additionally comprise a learning procedure to determine the sets of (sub)optimal clock division factors for considered scenarios.

The solution as described herein facilitates achieving a balance between current consumption and performance, and in some embodiments, the balance between consumption and performance may be obtained to different degrees using different cost functions in learning procedures.

Thus, the solution as described herein enables the realization of long-life battery devices without downgrading their performance.

Without prejudice to the underlying principles, the details and the embodiments may vary, even significantly, with respect to what has been described by way of example only without departing from the scope of the embodiments.

The extent of protection is determined by the annexed claims.

**Claims**

1. A circuit (20) comprising a plurality of peripherals $(18_{11}, 18_{12}, ..., 18_{1k}; ...; 18_{N1}, 18_{N2}, ..., 18_{Nk})$ configured to be clocked with respective clock signals (CK11, CK12, ..., CKlk; ..., CKN1, CKN2, ..., CKNk), wherein the circuit (20) comprises a clock controller (217) configured $(16_1, ..., 16_N; 19_1, ..., 19_N)$ to produce said respective clock signals (CK11, CK12, ..., CKlk; ..., CKN1, CKN2, ..., CKNk) via respective clock divide factors $(N_1, ..., N_k)$, the clock controller (217) having stored therein respective sets of clock divide factors $(N_1, ..., N_k)$, wherein the clock controller (217) comprises clock divide factor selection circuitry (266) configured to select (271, 277) an operating set of clock divide factors $(N_1, ..., N_k)$ out of said respective sets of clock divide factors $(N_1, ..., N_k)$ and wherein the clock controller (217) is configured $(16_1, ..., 16_N; 19_1, ..., 19_N)$ to apply (277) to the plurality of peripherals $(18_{11}, 18_{12}, ..., 18_{1k}; ...; 18_{N1}, 18_{N2}, ..., 18_{Nk})$ respective clock signals (CK11, CK12, ..., CKlk; ..., CKN1, CKN2, ..., CKNk) produced via the clock divide factors $(N_1, ..., N_k)$ in the operating set of clock divide factors $(N_1, ..., N_k)$ selected out of said respective sets of clock divide factors $(N_1, ..., N_k)$.

2. The circuit (20) of claim 1, wherein the clock controller (217) comprises a plurality of storage locations $(272; 272_1, 272_2, ... 272_i, 272_j, 272_M)$ comprising a first storage location $(272_1)$ and a second storage location $(272_2)$ having stored therein a first set and a second set of clock divide factors, respectively, wherein, in response to being clocked by respective clock signals (CK11, CK12, ..., CKlk; ..., CKN1, CKN2, ..., CKNk) produced via said second set of clock divide factors $(272_2)$, the plurality of peripherals $(18_{11}, 18_{12}, ..., 18_{1k}; ...; 18_{N1}, 18_{N2}, ..., 18_{Nk})$ have a lower power absorption than when clocked by respective clock signals (CK11, CK12, ..., CKlk; ..., CKN1, CKN2, ..., CKNk) produced via said first set of clock divide factors $(272_1)$.

3. The circuit (20) of claim 2, wherein the clock divide factor selection circuitry (266) in the clock controller (217) is configured to receive a power status signal (PS) and to select said operating set of clock divide factors $(N_1, ..., N_k)$ out of said first set and said second set of clock divide factors $(N_1, ..., N_k)$ based on said power status signal (PS).

4. The circuit (20) of claim 3, comprising:

   a consumption detector (215, 215') configured to monitor the amount of current absorbed by the circuit (20),
   a power control logic unit (116) configured to receive a current evaluation signal (CE) from the consumption detector (215, 215') and produce said power status signal (PS) based the current evaluation signal (CE).

5. The circuit (20) of claim 4, wherein the consumption detector (215, 215') is configured to have stored therein upper $(Imax1_{reg})$ and lower $(Imax2_{reg})$ threshold values for the current absorbed by the circuit (20), wherein the power control logic unit (116) is configured to produce said power status signal (PS) based on the result of comparing the amount of current absorbed by the circuit (20) with said upper $(Imax1_{reg})$ and lower $(Imax2_{reg})$ threshold values.

6. The circuit (20) of claim 5, wherein said upper (Imax1reg) and lower (Imax2reg) threshold values are selectively adjustable.

7. The circuit (20) of claim 5 or claim 6, wherein the consumption detector (215') comprises counter circuitry (137, 140) configured to have count first $(CImax1_{reg})$ and second $(CImax2_{reg})$ counter values that are updated in response to the current absorbed by the circuit (20) reaching said upper $(Imax1_{reg})$ and lower $(Imax2_{reg})$ threshold values respectively.

8. The circuit (20) according to any of the previous claims, wherein the circuit (20) is configured to operate in a sequence of power cycles, and at least one set of clock divide factors $(N_1, ..., N_k)$ in said sets of clock divide factors $(N_1, ..., N_k)$:

   is stored in a non-volatile memory and loaded during a power cycle in said sequence of power cycles, or
   is re-calculated during a power cycle in said sequence of power cycles.

9. A method of configuring a circuit (20) according to any of the previous claims, wherein the method comprises the clock controller (217) selecting a set of learning clock divide factors $(272_M)$ as a candidate operating set of clock divide factors $(N_1, ..., N_k)$, and

   a) executing one or more tasks through said circuit (20) with the plurality of peripherals $(18_{11}, 18_{12}, ..., 18_{1k}; ...; 18_{N1}, 18_{N2}, ..., 18_{Nk})$ clocked with respective clock signals (CK11, CK12, ..., CKlk; ..., CKN1, CKN2, ..., CKNk) produced via said set of learning clock divide factors $(272_M)$,
   b) checking circuit consumption and performance indicators in executing said one or more tasks against target consumption and performance specifications,

   and

   in response to said circuit consumption and performance indicators in executing said one or more tasks meeting said target consumption and performance specifications, selecting said learning clock divide factors ($272_M$) as a configurated operating set of clock divide factors ($N_1, ..., N_k$); or

in response to said circuit consumption and performance indicators in executing said one or more tasks failing to meet said target consumption and performance specifications repeating steps a) and b) with modified values for said set of learning clock divide factors ($272_M$).

10. The method of claim 9, wherein said consumption and performance indicators in executing said one or more tasks comprise an execution cost defined via one of simulated annealing and tabu search.

Fig. 1

EP 4 439 234 A1

Fig. 2

Fig. 3

Fig. 4A

Fig. 4B

Fig. 5

16

266

134

$272_1$

PS

277

271

$272_2$

Imax1

$272_i$

$N_1$

Imax2

$272_j$

$N_k$

M

SEL

$272_M$

INT

Fig. 6

17

Europäisches
Patentamt

European
Patent Office

Office européen
des brevets

# EUROPEAN SEARCH REPORT

**Application Number**

EP 24 16 3177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/204831 A1 (COUSSON BENOIT [FR] ET AL) 13 August 2009 (2009-08-13) <br> * paragraphs [0011] - [0219]; figures 1-23 * <br> ----- | 1-10 | INV. <br> G06F1/32 <br> G06F1/08 |
| A | US 2020/319690 A1 (SODHI INDER M [US] ET AL) 8 October 2020 (2020-10-08) <br> * the whole document * <br> ----- | 1-10 | |
| A | US 2022/244767 A1 (SODANI AVINASH [US] ET AL) 4 August 2022 (2022-08-04) <br> * the whole document * <br> ----- | 1-10 | |
| A | US 2016/294374 A1 (GEMMA KAZUAKI [JP]) 6 October 2016 (2016-10-06) <br> * the whole document * <br> ----- | 1-10 | |

**TECHNICAL FIELDS
SEARCHED      (IPC)**

G06F

The present search report has been drawn up for all claims

| Place of search | Date of completion of the search | Examiner |
|---|---|---|
| Munich | 22 July 2024 | Vertua, Arturo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 3177

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2024

| Patent document cited in search report | | | Publication date | Patent family member(s) | | | Publication date |
|---|---|---|---|---|---|---|---|
| US 2009204831 | A1 | | 13-08-2009 | NONE | | | |
| US 2020319690 | A1 | | 08-10-2020 | NONE | | | |
| US 2022244767 | A1 | | 04-08-2022 | US | 11340673 | B1 | 24-05-2022 |
| | | | | US | 2022244767 | A1 | 04-08-2022 |
| US 2016294374 | A1 | | 06-10-2016 | CN | 106026986 | A | 12-10-2016 |
| | | | | JP | 6503214 | B2 | 17-04-2019 |
| | | | | JP | 2016192603 | A | 10-11-2016 |
| | | | | US | 2016294374 | A1 | 06-10-2016 |

EPO FORM P0459

For more details about this annex : see Official Journal of the European Patent Office, No. 12/82